# EUROPEAN PATENT SPECIFICATION

(11) **EP 2 154 819 B1**
(45) Date of publication and mention of the grant of the patent: **27.02.2013**
(21) Application number: 08800691.1
(22) Date of filing: 28.08.2008
(51) Int. Cl.: H04L 29/08, H04L 29/06, G06F 21/00

(54) **CONTENT SHARING METHOD, SERVER AND SYSTEM**
VERFAHREN, SERVER UND SYSTEM ZUR GEMEINSAMEN NUTZUNG VON INHALTEN
PROCÉDÉ, SERVEUR ET SYSTÈME DE PARTAGE DE CONTENU

(30) Priority: 28.08.2007 CN 200710145593
(43) Date of publication of application: 17.02.2010
(60) Divisional application: 12192323.9
(73) Proprietor: Huawei Technologies Co., Ltd., Longgang District, Shenzhen Guangdong 518129 (CN)
(72) Inventor: LI, Suzhi c/o Huawei Technologies Co.Ltd., Longgang District 518129, Shenzhen (CN); YÎ, Dong c/o Huawei Technologies Co.Ltd., Longgang District 518129, Shenzhen (CN)
(74) Representative: Kreuz, Georg Maria
(86) International application number: PCT/CN2008/072179
(87) International publication number: WO 2009/030158

(56) References cited:
- EP-A1- 0 715 245
- WO-A1-2004/055650
- CN-A- 1 726 448
- CN-C- 1 142 659
- CN-C- 1 326 053
- US-A1- 2004 024 890
- US-A1- 2006 212 497

## Description

### FIELD OF THE TECHNOLOGY

The present invention relates to an information sharing technology, and more particularly to a method, server and system for sharing information.

### BACKGROUND OF THE INVENTION

With the development of information technology, the information transmission mode becomes more and more diversified, among which sharing information has currently become one of the main information transmission modes. To ease the illustration, the sharing provider and sharing receiver are defined as follows.

Sharing provider: a user that initiatively shares information with others; and

Sharing receiver: a user that receives the shared information.

In the prior art, according to a sharing digital transmission method in the computer network, shared information is first packed and uploaded to a server that the sharing provider registers to, the access authorities of sharing receivers are set individually, and a sharing-related message is then sent to a user that is authorized to acquire the shared information, so that the user is enabled to directly download shared data from the server that the sharing provider registers to according to actual requirements.

WO 2004/055650 A1 discloses a method and a system for converting digital rights. If the proprietor would like to share the right with other content consumers, the unlimited right can be converted into a number of limited rights, wherein these limited rights can be freely shared with the other content consumers. The recipients selected by the proprietor from amongst the other content consumers can further distribute one of the received limited right to yet other content consumers as desired by the selected recipients.

US 2006/212497 A1 discloses a document administration apparatus, including a sharing request receiving portion configured to receive a request of sharing a document stored in a first box among boxes which are divided storing areas, a box information receiving portion configured to receive box information on one or more second boxes each correlated with each user sharing the document to which the sharing request is made, a shortcut creating portion configured to create a shortcut to all of the second boxes represented by the box information received by the box information receiving portion, the shortcut including link information to the document stored in the first box, and a link portion configured to process an access to the shortcut created by the shortcut creating portion by replacing the access with an access to the document which is a linked destination written in the shortcut. Two types of boxes are disclosed: public boxes with no access restrictions, whereas private boxes each have a password which controls access. When creating a shortcut in a private box, a shortcut is created in each of the private boxes corresponding to the sharing users. When creating a shortcut in a public box, a single shortcut is created in the public box and all the identification information of users sharing the document is specified in the shortcut. It is possible to cope with member change in the group by creating or adding a shortcut. The accessed number of times to the shared document is recorded and if the accessed number of times reaches a predetermined limit then the access is terminated.

### SUMMARY OF THE INVENTION

The present invention is directed to a method, a server, and a system for sharing information, so as to improve the efficiency and flexibility of information sharing.

As a first aspect of the invention an information sharing and re-sharing server is provided. Said server includes a re-sharing setting unit, adapted to set a tag for a target shared information that sets a re-sharing authority of the target shared information for others, allowing the target shared information to be re-shared or shared for several times by a sharing receiver,
the re-sharing setting unit being adapted to record a sharing relationship between the sharing receiver and the target shared information so as to facilitate determining whether the information is allowed to be re-shared,
the re-sharing setting unit being further adapted to receive a re-sharing setting request for the target shared information, and according to the re-sharing setting request, set the target shared information to a re-sharing state in which the sharing receiver is allowed to re-share the target shared information with other sharing receiver; and
a re-sharing unit adapted to receive a re-sharing request for the target shared information, and set the target shared information that is in a re-sharing state to a sharing state.

As a second aspect of the invention an information sharing system is provided. The system includes an information sharing and re-sharing server and a terminal. The terminal includes: a request sending unit, adapted to send an instruction including a re-sharing setting request and a re-sharing request for target shared information. The information sharing and re-sharing server includes: Said server includes a re-sharing setting unit, adapted to set a tag for a target shared information that sets a re-sharing authority of the target shared information for others, allowing the target shared information to be re-shared or shared for several times by a sharing receiver,
the re-sharing setting unit being adapted to record a sharing relationship between the sharing receiver and the target shared information so as to facilitate determining whether the information is allowed to be re-shared,
the re-sharing setting unit being further adapted to receive a re-sharing setting request for the target shared information, and according to the re-sharing setting request, set the target shared information to a re-sharing state in which the sharing receiver is allowed to re-share the target shared information with other sharing receiver; and
a re-sharing unit adapted to receive a re-sharing request for the target shared information, and set the target shared information that is in a re-sharing state to a sharing state.

As a third aspect of the invention an information sharing method executed by an information sharing and re-sharing server is provided. The method includes: setting target shared information to a re-sharing state in which a sharing receiver is allowed to re-share the target shared information; recording a sharing relationship between the sharing receiver and the target shared information so as to facilitate determining whether the information is allowed to be re-shared, setting a tag that sets a re-sharing authority of the target shared information for others, allowing the target shared information to be re-shared or shared for several times; and receiving a re-sharing request for the target shared information, and setting (502) the target shared information to a sharing state after the target shared information is set to the re-sharing state.

As is known from the above technical solutions, a re-sharing mechanism is applied for sharing information, and an information owner grants a re-sharing authority of the information to others, that is, sets the shared information to a state in which a sharing receiver is allowed to re-share the information after receiving a re-sharing setting instruction. Thus, according to the present invention, upon receiving the re-sharing requesting instruction, the shared information is set to a sharing state, so as to achieve the purpose of sharing the information for twice or multiple times, thereby enriching the information sources, facilitating a more rapid and extensive transmission of the information, and diversifying the network information sharing mode.

### BRIEF DESCRIPTION OF THE DRAWINGS

FIG. 1 is an exemplary functional block diagram of an information sharing server according to an embodiment of the present invention;
FIG. 2 is an exemplary functional block diagram of an information sharing server according to an embodiment of the present invention;
FIG. 3 is an exemplary functional block diagram of an information sharing server according to an embodiment of the present invention;
FIG. 4 is an exemplary functional block diagram of an information sharing system according to an embodiment of the present invention;
FIG. 5 is an exemplary flow chart of a method for sharing information according to an embodiment of the present invention;
FIG. 6 is an exemplary flow chart of uploading information of the method for sharing information according to an embodiment of the present invention;
FIG. 7 is an exemplary flow chart of sharing information for once of the method for sharing information according to an embodiment of the present invention;
FIG. 8 is an exemplary flow chart of sharing information for twice of the method for sharing information according to an embodiment of the present invention; and
FIG. 9 is an exemplary flow chart of canceling information sharing of the method for sharing information according to an embodiment of the present invention.

### DETAILED DESCRIPTION OF THE EMBODIMENTS

In order to make the objectives, technical solutions, and advantages of the present invention more comprehensible, the present invention is described in detail below with reference to the embodiments and the accompanying drawings.

According to the embodiments of the present invention, a method , server and system for sharing information applicable to a network are provided, in which data can be set to a state of to be re-shared or to be shared for several times. If the data is set to be re-shared or shared several times, a sharing receiver can re-share the data with others through the information sharing system. On the contrary, if the data is set not to be re-shared or shared for several times, or set not to be shared, the system prevents the sharing receiver from sharing the data with others. Moreover, after logging in to the system, the sharing receiver can easily and directly view the data shared or re-shared/shared several times from others. Through the embodiments of the present invention, information can be shared over wired or wireless networks, and thus can be transmitted more rapidly and widely to enrich the network life of users.

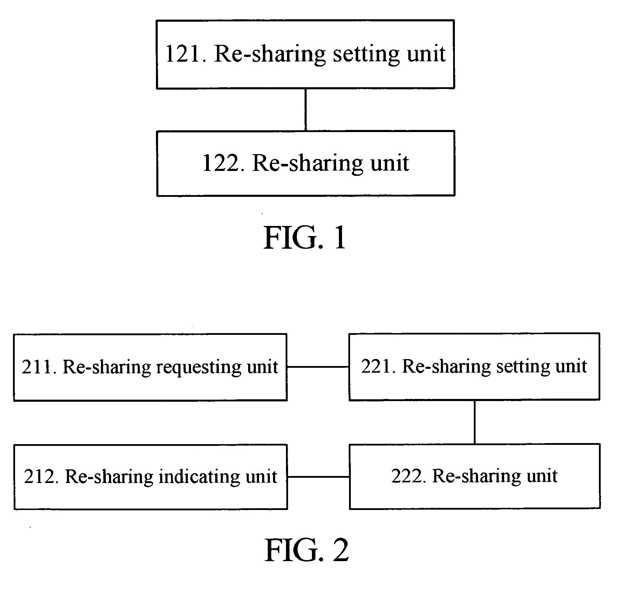

FIG 1 is a functional block diagram of an information sharing server according to an embodiment of the present invention. The server includes a re-sharing setting unit 121 and a re-sharing unit 122.

The re-sharing setting unit 121 is adapted to receive a re-sharing setting request for target shared information, and set the target shared information to a re-sharing state in which a sharing receiver is allowed to re-share the information.

The re-sharing unit 122 is adapted to receive a re-sharing request for the target shared information, and set the target shared information in a re-sharing state to a sharing state.

In this embodiment, the information sharing server receives a re-sharing setting request from a client, and sets the target shared information to a re-sharing state in which a sharing receiver is allowed to re-share the information. Afterwards, the sharing receiver performs sharing setting for the target shared information in the information sharing server through the client of the sharing receiver, so as to fulfill a re-sharing process, thereby enriching the information sources and facilitating a more rapid and extensive transmission of the information.

FIG. 2 is a functional block diagram of an information sharing server according to another embodiment of the present invention. The server includes a re-sharing requesting unit 211, a re-sharing setting unit 221, a re-sharing indicating unit 212, and a re-sharing unit 222.

The re-sharing requesting unit 211 is adapted to send a re-sharing setting request after receiving a re-sharing setting instruction for information from a sharing provider.

The re-sharing setting unit 221 is adapted to receive the re-sharing setting request from the re-sharing requesting unit 211, and set the target shared information to a re-sharing state in which a sharing receiver is allowed to re-share the target information.

The re-sharing indicating unit 212 is adapted to send a re-sharing request after receiving a re-sharing requesting instruction.

The re-sharing unit 222 is adapted to receive the re-sharing request for the target shared information from the re-sharing indicating unit 212, and set the target shared information in a re-sharing state to a sharing state.

In this embodiment, after receiving the re-sharing setting request from the re-sharing requesting unit 211, the re-sharing setting unit 221 sets the target shared information to a re-sharing state in which the sharing receiver is allowed to re-share the information. Therefore, in this embodiment, after receiving the re-sharing request from the re-sharing indicating unit 212, the re-sharing unit 222 sets the target shared information to the sharing state, so as to achieve the purpose of sharing twice or for multiple times, thereby enriching the information sources, facilitating a more rapid and extensive transmission of the information, and diversifying the network life of users.

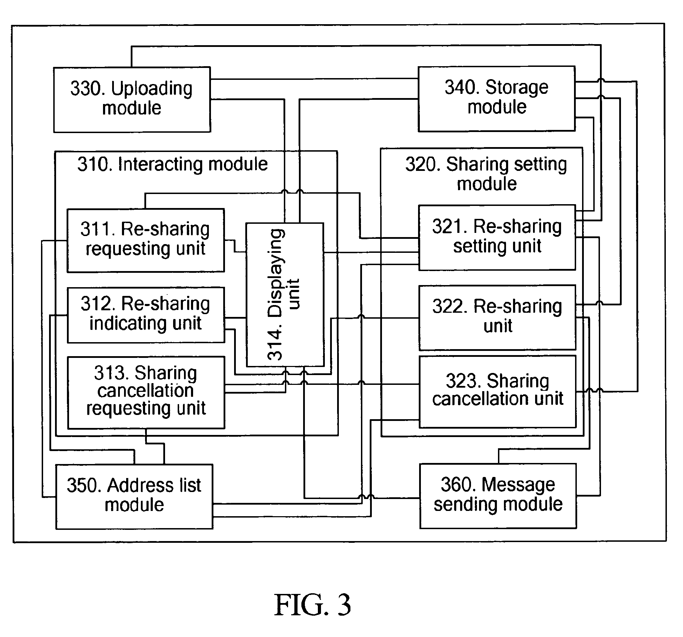

FIG. 3 is a functional block diagram of an information sharing server according to an embodiment of the present invention. The server includes an interacting module 310, a sharing setting module 320, an uploading module 330, a storage module 340, an address list module 350, and a message sending module 360.

The interacting module 310 includes a re-sharing requesting unit 311, a re-sharing indicating unit 312, a sharing cancellation requesting unit 313, and a displaying unit 314. The sharing setting module 320 includes a re-sharing setting unit 321, a re-sharing unit 322, and a sharing cancellation unit 323.

The re-sharing requesting unit 311 of the interacting module 310 is adapted to send a re-sharing setting request for allowing re-sharing after receiving a re-sharing setting instruction for information from a sharing provider. In this embodiment, the re-sharing requesting unit 311 specifically selects a designated sharing receiver from a contact list provided by the address list module 350 after receiving the re-sharing setting instruction for information from the sharing provider, and then sends the re-sharing setting request for allowing re-sharing to allow the designated sharing receiver to re-share the target shared information.

The re-sharing setting unit 321 of the sharing setting module 320 is adapted to receive the re-sharing setting request for allowing re-sharing from the re-sharing requesting unit 311, and set target shared information to a re-sharing state in which a sharing receiver is allowed to re-share the information. Specifically, the sharing provider has already shared the information for the first time (initial sharing), and still needs to set the re-sharing authority on the shared information for others. For example, A shares information with B, and meanwhile sets the sharing authority on the information, so that when obtaining the information, B not only acquires the information, but is also granted the authority to re-share the information, for example, share with C.

The address list module 350 is adapted to provide contact information. In particular, the address list module 350 is adapted to provide the re-sharing requesting unit 311 with the contact information after the re-sharing requesting unit 311 receives the re-sharing setting instruction for information from the sharing provider, so that the re-sharing requesting unit 311 is enabled to add information of allowing the contact to re-share the target shared information in the re-sharing setting request for allowing re-sharing, that is, to generate the re-sharing setting request for the designated sharing receiver. To put it briefly, the address list module 350 is an online address list of the user, and can be shared with other systems. The address list records all the contacts, and the user can share the information with all the contacts stored in the address list module 350.

The message sending module 360 is adapted to send a sharing event notifying message to the designated sharing receiver after the re-sharing setting unit 321 sets the target shared information to a re-sharing state in which the sharing receiver is allowed to re-share the information. In this embodiment, the message sending module 360 is connected to a wired or wireless network, and sends the sharing event notifying message, for example, a short message, a multimedia message, or an instant message to the designated sharing receiver through the wired or wireless network.

The displaying unit 314 of the interacting module 310 is adapted to display information for the user. In particular, the displaying unit 314 is adapted to display a system interface, a login interface, and the like, and is also capable of automatically displaying information owned by a user after the user logs in to the system.

The uploading module 330 is adapted to process a data uploading request from the user, and perform necessary checks, for example, provide an interface for the user to select an information object, limit a file size, and the like together with the displaying unit 314 of the interacting module 310 so as to complete a content uploading operation. Moreover, when the user uploads information, the uploading module 330 transmits attribute data of the information to the re-sharing setting unit 321 of the sharing setting module 320, and thus the sharing setting module 320 is enabled to perform sharing setting on the information.

The storage module 340 is adapted to receive and store the data uploaded by the uploading module 330. In particular, the storage module 340 is adapted to store by category and manage the information uploaded by the user; the information uploaded by the user may include texts, graphics, and audio/video files.

The sharing cancellation requesting unit 313 of the interacting module 310 is adapted to send a sharing cancellation request after receiving a sharing cancellation instruction from the sharing provider. In this embodiment, the sharing cancellation requesting unit 313 specifically selects a cancelled sharing receiver from a contact list provided by the address list module 350 after receiving the sharing cancellation instruction from the sharing provider, and then sends the sharing cancellation request for canceling the sharing relationship between the cancelled sharing receiver and the target shared information.

The sharing cancellation unit 323 of the sharing setting module 320 is adapted to cancel the sharing state of the target shared information after receiving the sharing cancellation request. In particular, the sharing cancellation unit 323 is adapted to cancel the sharing relationship between the cancelled sharing receiver and the target shared information according to information about the cancelled sharing receiver provided by the address list module 350.

Specifically, the address list module 350 provides the contact information to the sharing cancellation requesting unit 313 after providing the contact information to the re-sharing requesting unit 311, so that the sharing cancellation requesting unit 313 is enabled to add information about the sharing receiver having the sharing authority to be cancelled in the sharing cancellation request, that is, to form the sharing cancellation request containing the information about the cancelled sharing receiver.

The displaying unit 314 of the interacting module 310 is further adapted to display the message from the message sending module 360 after the sharing receiver logs in to the system, or directly display information that can be re-shared in the storage module 340 and the contact list of the user stored in the re-sharing setting unit 321. The user selects the content to be shared with others from the message or information, selects the designated sharing receiver from the contact list, and triggers the sending of a re-sharing requesting instruction.

The re-sharing indicating unit 312 of the interacting module 310 is adapted to send a re-sharing request after receiving the re-sharing requesting instruction. In this embodiment, the re-sharing indicating unit 312 specifically selects a sharing receiver from the contact list provided by the address list module 350 after receiving the re-sharing requesting instruction from the sharing provider, and then sends the re-sharing request for sharing the target shared information that is already set to be re-shared with the sharing receiver.

The re-sharing unit 322 of the sharing setting module 320 is adapted to receive the re-sharing request from the re-sharing indicating unit 312, set the target shared information to a sharing state to the designated sharing receiver, and set the target shared information to a state of which the designated sharing receiver is not allowed to re-share the information after the information is set to the sharing state. For example, in accordance with the above example, A sets the sharing authority on the target shared information, so that when obtaining the information, B not only acquires the target shared information, but is also granted the authority to re-share the target shared information, for example, share with C. The sharing authority granted by A to B may be valid for only once. Therefore, after B re-shares the target shared information, the re-sharing unit 322 sets the target shared information to a not allowing re-sharing state for the designated sharing receiver C, that is, C cannot perform sharing setting on the target shared information after acquiring the target shared information. In an embodiment, data is set to be shared for several times, A may set the sharing authority of the information to multiple sharing. For example, after A grants the re-sharing authority to B, B may grant the re-sharing authority to C, and the like.

In particular, the address list module 350 further provides the contact information to the re-sharing indicating unit 312 based on the above structure and function, so that the re-sharing indicating unit 312 is enabled to add information about the sharing receiver having the sharing authority to the re-sharing request, that is, to form the re-sharing request containing the information about the sharing receiver.

The displaying unit 314 serving as an interface processing unit between the user and the system is not only adapted to display information shared by others with the user who logs in to the system, but also display information shared by the user who logs in to the system with others. The user who logs in to the system performs various operations through the interface, for example, viewing personal information, information shared by others and sharing-related information, and information shared with others; displaying an interface of management like uploading, deletion, and modification of the information; displaying an interface of setting or canceling information sharing; and displaying an interface of setting a sharing notification mode.

In particular, when others set to share certain information with the user through the re-sharing requesting unit 311 and the re-sharing setting unit 321, the user logs in to the system, the displaying unit 314 extracts various sharing-related information corresponding to the user from the re-sharing setting unit 321, for example, information that allows the user to re-share a certain information by the others, and the user may view an icon or a thumbnail of the information. The sharing-related information includes description of the sharing provider and sharing time, and can be extended according to actual applications. Similarly, after the user logs in to the system, the displaying unit 314 may extract and display related information shared by the user with the others through the re-sharing requesting unit 311 and the re-sharing setting unit 321. The displaying unit 314 may also extract and display information about the information uploaded by the user to the storage module 340, so as to enable the user to view and perform operations like re-sharing setting.

When the information sharing server is used, the following operations are performed.
1) The displaying unit 314 provides a login interface, the sharing provider enters the system from the login interface, and uploads an entity of the information to the storage module 340 through the uploading module 330 and stores attribute data of the information to the re-sharing setting unit 321.
2) After the information is uploaded, the sharing provider views the uploaded information object in the storage module 340 through the interface displayed by the displaying unit 314, and sets an initial sharing of the information. Then, a designated sharing receiver is selected from a contact list of the user provided by the re-sharing setting unit 321. After the operations of the user, the re-sharing requesting unit 311 is triggered to generate and send a re-sharing setting request to the re-sharing setting unit 321, and the re-sharing setting unit 321 sets the information selected by the user in the storage module 340 to be shared with the designated sharing receiver.

If the sharing provider is an information owner, when the sharing provider performs a sharing setting on a certain piece of information, the re-sharing requesting unit 311 may provide options regarding whether the information is allowed to be shared twice or shared for several times.

The re-sharing setting unit 321 queries data recorded therein and performs logic determination to realize the authority that controls whether the information can be shared twice or several times.

After the sharing provider selects the information sharing mode, the re-sharing requesting unit 311 is triggered to send a re-sharing setting request for allowing re-sharing directed to the information object. The re-sharing setting unit 321 processes the re-sharing setting request, for example, storing the sharing relationship and sharing time, and setting a tag of allowing the information to be re-shared or shared for several times, so as to facilitate the subsequent displaying of the information and determining whether the information is allowed to be re-shared.
3) After the sharing setting is successfully performed, the message sending module 360 sends the sharing setting event to the sharing receiver (that is, the designated sharing receiver) in a wired or wireless mode, for example, through a short message, a multimedia message, or an instant message. The specific notification mode is recorded by the re-sharing setting unit 321, and the sharing setting event is sent through a message according to the recorded notification mode.

Meanwhile, the displaying unit 314 extracts sharing setting information from the re-sharing setting unit 321, and refreshes the login interface of the user, that is, puts a sharing tag on the information allowed to be re-shared so as to distinguish the information allowed to be re-shared from information that is not allowed to be shared.

As the attribute data and the sharing relationship of the shared information are recorded in the re-sharing setting unit 321, the displaying unit 314 displays the information, the attribute data of the information, and the shared information by querying the recorded data in the re-sharing setting unit 321.
4) The displaying unit 314 provides the login interface to the sharing receiver, and the sharing receiver initiatively logs in to the system, or logs in to the system after receiving a re-sharing message from the message sending module 360. After the sharing receiver logs in to the system, the displaying unit 314 displays the information owned by the user in the storage module 340, and extracts the user-related information from the re-sharing setting unit 321, and the user-related information includes related information about the information allowed to be re-shared, the sharing time, and the sharing receiver thereof. In addition, the information is displayed in the form of an icon or a thumbnail.
5) After the user selects the information object allowed to be re-shared, the sharing receiver may be selected from the contact list stored in the address list module 350 or manually added, or the sharing receiver is not limited and any user can obtain the shared information object. Then, the re-sharing instruction is delivered through an instruction delivery interface provided by the re-sharing indicating unit 312 of the interacting module 310. The re-sharing indicating unit 312 sends the re-sharing request to the re-sharing unit 322 after receiving the re-sharing requesting instruction. The re-sharing unit 322 receives the re-sharing request for the target shared information, and sets the target shared information to a re-sharing state in which the designated sharing receiver is allowed to re-share the information. Here, the user selects a specific sharing receiver, and only the specific sharing receiver can obtain the information. Meanwhile, the displaying unit 314 displays the refreshed interface information, including the information already updated to the sharing state and other information that are not allowed to be shared.
6) After the information is set to the sharing state, the sharing may also be cancelled. In particular, the user delivers a sharing cancellation instruction for the target shared information through an instruction delivery interface provided by the sharing cancellation requesting unit 313 of the interacting module 310. The delivered instruction may include the information to be cancelled of sharing and the sharing receiver to be cancelled of the sharing relationship, or only include the information to be cancelled of sharing, and at this time, the sharing receiver to be cancelled of the sharing relationship includes all users by default. The sharing cancellation requesting unit 313 selects the information about the sharing receiver to be cancelled of the sharing relationship from the contact list provided by the address list module 350 after receiving the sharing cancellation instruction from the sharing provider, thereby forming a sharing cancellation request and sending the request to the sharing cancellation unit 323. The sharing cancellation unit 323 receives the sharing cancellation request, and cancels the sharing relationship between the cancelled sharing receiver and the target information.

The cancellation of information sharing by the sharing provider has the following three circumstances.
1) The information owner cancels the sharing of the information. In particular, the sharing cancellation unit 323 allows the information owner to cancel the sharing of the information to a certain user or cancel all the sharing relationships of the information.
2) A user other than the information owner cancels the sharing of the information. In particular, the sharing cancellation unit 323 prevents the user from canceling all the sharing relationships of the information. The sharing directly cancelled by the sharing provider is all set by the provider. If the information sharing with a certain user is cancelled, the sharing relationship depending on the user (transferred sharing relationship) is also cancelled.
3) The information owner cancels the re-sharing of the information. In particular, the sharing cancellation unit 323 allows the information owner to cancel the re-sharing of the information with a certain user and cancel the re-sharing of certain information, or cancel all the re-sharing relationships of the information. After the cancellation, the sharing receiver revoked of the re-sharing relationship cannot perform sharing setting on the information, but can acquire the information after the information owner shares the information with the receiver.

In addition, the storage module 340 also provides information management operations like deletion, modification, and so on.

The embodiment of the information sharing server shown in FIG. 3 is similar to that in FIG. 1, and the difference is as follows.

In the information sharing server shown in FIG. 1, the user performs operations like sharing or sharing cancellation on a remote information sharing server by using client software on the client; while in the information sharing server shown in FIG. 3, the interacting module 310 of the information sharing server is adapted to perform operations like sharing or sharing cancellation.

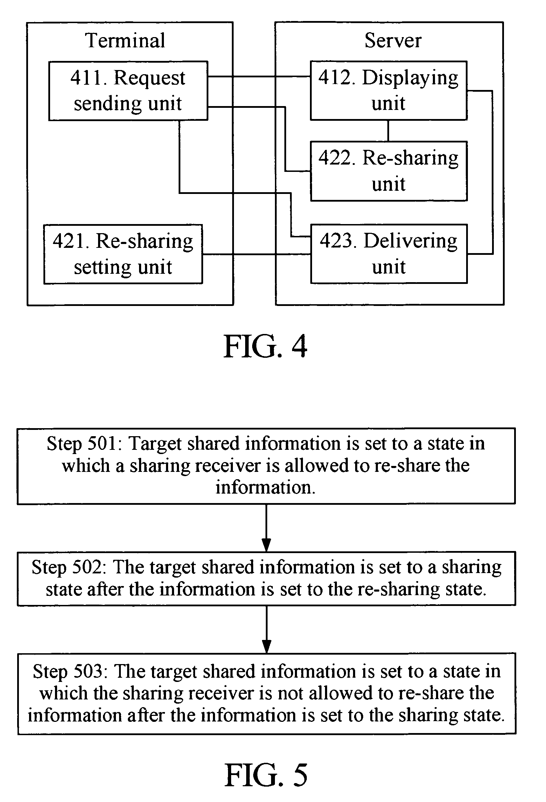

FIG. 4 is a functional block diagram of an information sharing system according to an embodiment of the present invention. The system includes an information sharing server and a terminal. The terminal includes a request sending unit 411.

The request sending unit 411 is adapted to send an instruction including a re-sharing setting request for allowing re-sharing and a re-sharing request for target shared information.

Similar to the first embodiment of the information sharing server according to the present invention, the information sharing server may includes a re-sharing setting unit 421 and a re-sharing unit 422.

The re-sharing setting unit 421 is adapted to receive the re-sharing setting request for allowing re-sharing from the request sending unit 411, and set the target shared information to a re-sharing state in which a sharing receiver is allowed to re-share the information.

The re-sharing unit 422 is adapted to receive the re-sharing request from the request sending unit 411, and set the target shared information to a sharing state.

The request sending unit of the terminal is further adapted to send a delivery request. Accordingly, the information sharing server further includes a delivering unit 423, adapted to send the information that can be re-shared to the sharing receiver after receiving the delivery request from the terminal.

The terminal further includes a displaying unit 412 adapted to display information. In particular, the displaying unit 412 is adapted to display the information that can be re-shared by the sharing receiver from the delivering unit 423 after the sharing receiver logs in to the system.

It should be noted that, in the embodiment of FIG. 3, the re-sharing requesting unit 311, the re-sharing indicating unit 312, the sharing cancellation requesting unit 313, and the displaying unit 314 of the interacting module 310 as well as the re-sharing setting unit 321, the re-sharing unit 322, and the sharing cancellation unit 323 of the sharing setting module 320 in the information sharing server may be integrated in one processing module. Similarly, in the embodiments of FIGs. 1, 2, and 4, the units in the information sharing server and system may also be integrated in one processing module; or, any two or more units among all the units in each embodiment may be integrated in one processing module.

It should also be noted that, the units in the information sharing server and system according to the embodiments of the present invention may be implemented through hardware, and the part that can be implemented through hardware may also be achieved through a software functional module. Accordingly, the interacting module 310 and the sharing setting module 320 in the information sharing server according to the embodiments of the present invention may be sold or used as an independent product, and the part that can be implemented through software may also be stored in a computer readable storage medium for sale or use.

FIG. 5 is a flow chart of a method for sharing information according to an embodiment of the present invention. The method includes the following steps.

In Step 501, target shared information is set to a re-sharing state in which a sharing receiver is allowed to re-share.

In Step 502, the target shared information is set to a sharing state after the target shared information is set to the re-sharing state.

In Step 503, the target shared information is set to a not allowing re-sharing state for the sharing receiver after the target shared information is set to the sharing state.

According to this embodiment, in Step 501, the target shared information is first set to the re-sharing state, and a sharing receiver that can be granted the re-sharing authority is designated. In Step 502, after the target shared information is set to the re-sharing state, another user performs sharing setting on the target shared information, and shares with a third party the target shared information that does not belong to the user, thereby achieving the purpose of re-sharing. In Step 503, a constraint operation is performed, and the sharing receiver granted with the re-sharing authority is constrained to be cancelled of the re-sharing authority after using the authority, so that the sharing receiver granted with the re-sharing authority cannot perform re-sharing setting on the target shared information any longer, and is thus distinguished from the owner of the target shared information.

As for the designated sharing receiver, in Step 501, that the target shared information is set to a re-sharing state in which the sharing receiver is allowed to re-share the information includes the following sub-steps.

In A1, a sharing receiver is selected from contact information of a sharing provider, and a re-sharing setting request for allowing the sharing receiver to re-share target shared information is sent.

In A2, after receiving the re-sharing setting request for allowing re-sharing, the target shared information is set to a re-sharing state in which the sharing receiver is allowed to re-share the information.

In order to notify the re-sharing setting time to the designated sharing receiver, in Step A2, after the target shared information is set to the re-sharing state in which the sharing receiver is allowed to re-share the information, the sharing event is notified to the designated sharing receiver through a wired or wireless network.

In order to realize visible operations for the designated sharing receiver, in Step 502, that the target shared information is set to the sharing state includes the following sub-steps.

In B1, after the sharing receiver logs in to the system, information that can be re-shared by the sharing receiver is displayed.

In B2, the target shared information is selected from the displayed information, and is set to the sharing state.

The sharing process is illustrated below with reference to the method for sharing information the present invention and the information sharing server in FIG. 3.

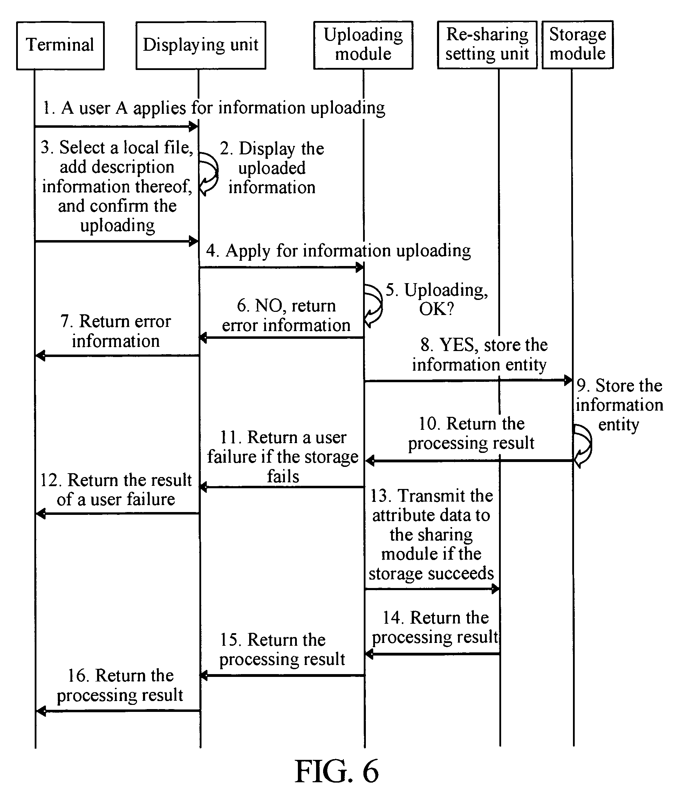

Firstly, an information uploading process is described as follows. Referring to FIG. 6, the process includes the following steps.
1) The displaying unit 314 of the terminal provides a login interface. The sharing provider logs in to the information sharing server through terminal software, and requests the information uploading through the interface.
2) The displaying unit 314 continues to display uploading related operations, and prompts the user to select a file and add description thereof.
3) The user selects a local file and adds description information thereof, and then confirms the uploading.
4) An uploading request is submitted to the uploading module 330 through the displaying unit 314.
5) The uploading module 330 checks the size and content of the uploaded information.
6) Error information is returned if the information does not meet requirements.
7) The displaying unit 314 returns the error information to the user, and prompts the user that the uploading fails.
8) If the information meets the requirements, an information storage request is submitted to the storage module 340.
9) The storage module 340 checks the user space, and then classifies and stores the information.
10) A processing result is returned to the uploading module 330.
11) If the information storage fails, a processing failure is returned to the displaying unit 314.
12) The displaying unit 314 returns failure message to the user.
13) If the information storage succeeds, the uploading module 330 transmits attribute data of the information to the re-sharing setting unit 321.
14) The re-sharing setting unit 321 records the attribute data, and returns a processing result to the uploading module 330.
15) The uploading module 330 returns the processing result to the displaying unit 314.
16) The displaying unit 314 returns the processing result to the user, and prompts the user of an uploading result.

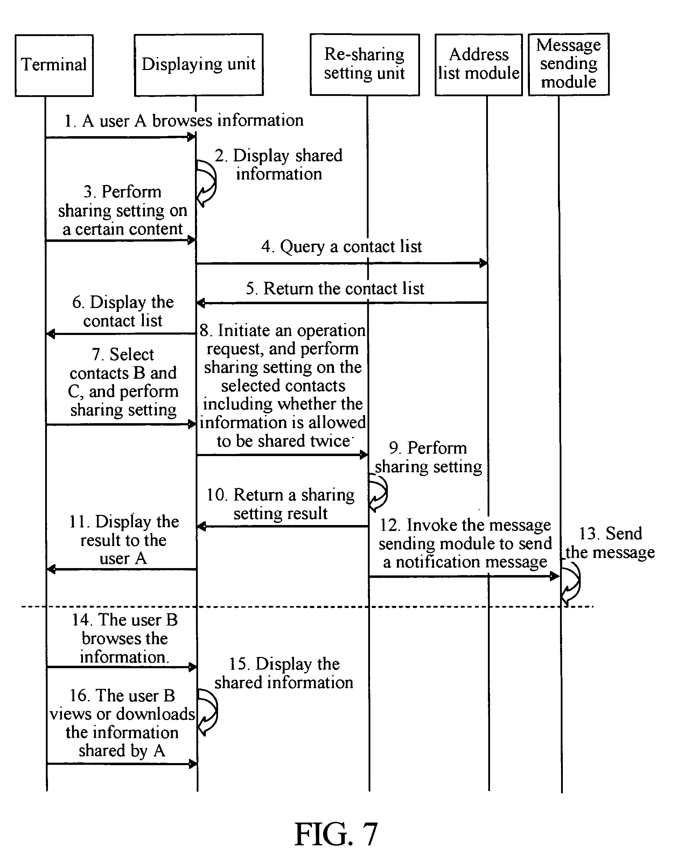

Secondly, a process in which the information is shared once (whether the information is allowed to be re-shared is set at the same time) is described as follows. Referring to FIG. 7, the process includes the following steps.
1) A user A logs in to the system through terminal software, and views information through the displaying unit 314 as a portal.
2) The displaying unit 314 reads attribute data of the user from the re-sharing setting unit 321, and displays information of attribute data of the user which includes information of the user and information shared by the contacts of the user.
3) The sharing provider A views the uploaded information in the storage module 340 through an interface displayed by the displaying unit 314, and sets an initial sharing of the information. Then, a re-sharing setting process is performed according to an instruction. The displaying unit 314 displays a contact list of the user provided by the address list module 350, presents the option of selection of the sharing receiver, and shows the options whether the information is allowed to be re-shared or not. The user selects the information, determines whether the information is allowed to be re-shared or not, selects a designated sharing receiver, and sets a mode for notifying the designated sharing receiver. The operation of the user triggers a re-sharing setting instruction.

The re-sharing setting instruction from the user may include information about whether the information is allowed to be shared twice or for several times (which can be set according to actual requirements).
4) The displaying unit 314 queries the address list module 350 for the contact list.
5) The address list module 350 returns the contact list.
6) The displaying unit 314 displays the contact list to the user.
7) The user selects the contact, and sends a re-sharing setting instruction for the information to the displaying unit 314.
8) The displaying unit 314 generates a re-sharing setting request according to the re-sharing setting instruction from the user, and applies for operations on the information object selected by the user in the storage module 340 through the re-sharing setting unit 321.
9) The re-sharing setting unit 321 performs re-sharing setting on the selected information, and records the sharing relationship, the sharing time, the times that the information is allowed to be shared, and the like.
10) A processing result is returned.
11) The displaying unit 314 returns the processing result to the user, updates the interface, and puts a sharing tag on the shared information.
12) After determining that the sharing setting is completed, the re-sharing setting unit 321 queries internal data records, determines the sharing event notification mode set by the user, transmits corresponding parameters, and requests the message sending of the message sending module 360.
13) The message sending module 360 sends a message to the sharing receiver.
14) One of the sharing receivers B logs in to the system through the terminal, and views information through the displaying unit 314.
15) The displaying unit 314 queries in the information data recorded in the re-sharing setting unit 321 according to the information about the sharing receiver, and displays information including information of the user and information shared by the contacts of the user; alternatively, the displaying unit 314 receives sharing event notifying message from the message sending module 360, and displays the sharing event notifying message to the user that logs in to the system.
16) The sharing receiver B views or downloads the shared information.

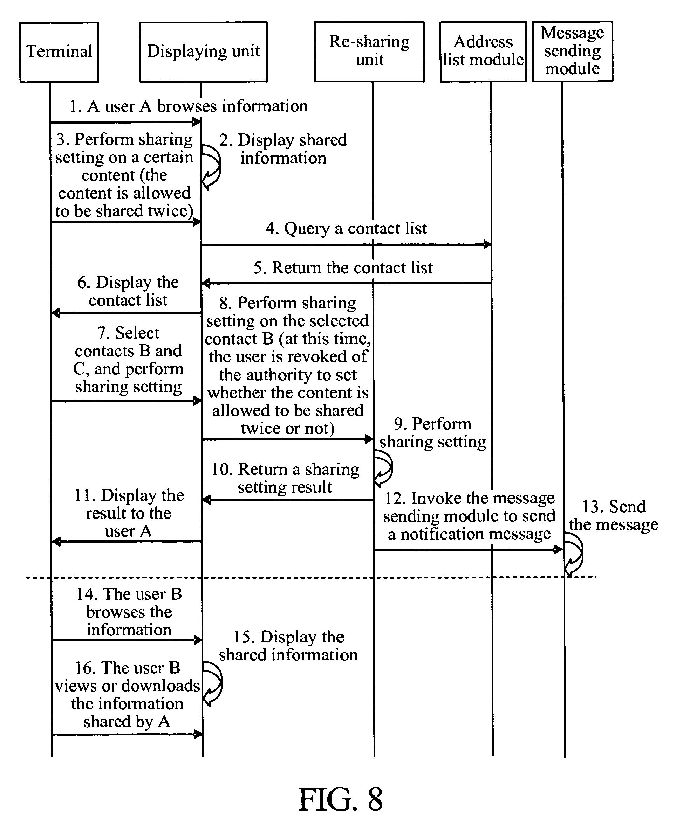

Thirdly, a process in which the information is shared twice is described as follows. This process is similar to the above process in which the information is shared once. The difference lies in that, in this process, the information sharing provider is not the information owner, and the information owner shares the information with the user and sets the information to be re-shared. Referring to FIG. 8, the process includes the following steps.
1) A user A logs in to the system through a login interface displayed by the displaying unit 314 on the terminal.
2) The displaying unit 314 reads information data of the user from the re-sharing setting unit 321, and displays information including information of the user and information shared by the contacts of the user. The information is displayed in the form of an icon or a thumbnail.
3) The user performs sharing setting on a certain information, and sends a query request for the contact list to the displaying unit 314.
4) The displaying unit 314 queries the address list module 350 for the contact list.
5) The address list module 350 returns the contact list.
6) The displaying unit 314 displays the contact list to the user.
7) The user selects a contact, and sends a re-sharing setting instruction to the displaying unit 314.
8) The displaying unit 314 displays a sharing setting operation portal provided by the re-sharing indicating unit 312, and meanwhile displays a sharing receiver list provided by the address list module 350. The user selects the information that can be shared, and selects the sharing receiver. The re-sharing indicating unit 312 generates a re-sharing request according to the user operation, and sends the re-sharing request to the re-sharing unit 322.
9) The re-sharing unit 322 receives the re-sharing request for the target shared information from the re-sharing indicating unit 312, sets the target shared information to a sharing state for the designated sharing receiver, and sets the target shared information to a not allowing re-sharing state for the designated sharing receiver after the target shared information is set to the sharing state.

The re-sharing unit 322 records the sharing relationship, the sharing time, and the like.
10) A processing result is returned.
11) The displaying unit 314 displays the processing result to the sharing provider, refreshes the displayed information, and puts a sharing tag on the shared information.
12) After determining that the sharing setting is completed, the re-sharing unit 322 queries internal data records, determines the sharing notification mode set by the user, transmits corresponding parameters, and requests to send the message.
13) The message sending module 360 sends a message to the sharing receiver.
14) One of the sharing receivers B logs in to the information sharing server through the terminal, and views information.
15) The displaying unit 314 of the terminal of the sharing receivers B queries in the information data recorded in the re-sharing unit 322 of the terminal of the sharing receivers B, and displays information including information of the user and information shared by the contacts of the user.
16) The sharing receiver B views or downloads the shared information.

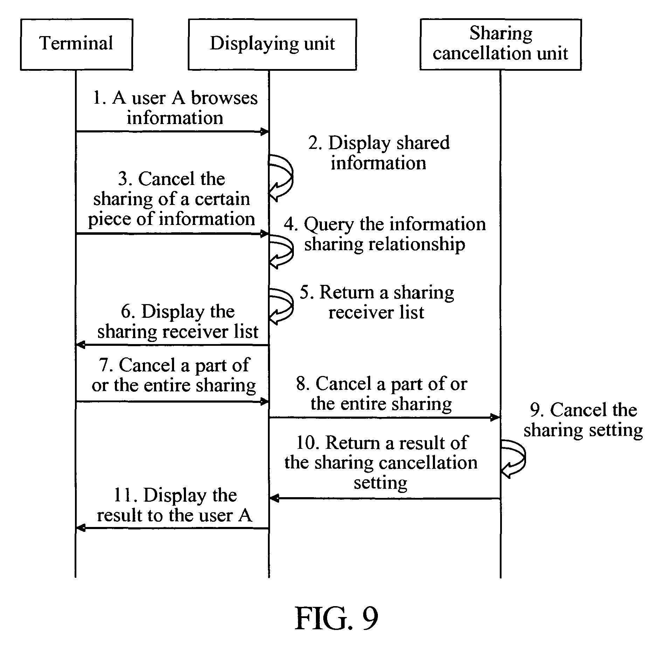

Finally, a process for canceling information sharing is described as follows. Referring to FIG. 9, the process includes the following steps.
1) A user logs in to the information sharing server through a login interface displayed by the displaying unit 314, and views information.
2) The displaying unit 314 reads attribute data of the user from the re-sharing setting unit 321 or the re-sharing unit 322, and displays information of attribute data of the user including information of the user and information shared by the contacts of the user.
3) The displaying unit 314 displays an operation interface for canceling information sharing provided by the sharing cancellation requesting unit 313, and the user performs a sharing cancellation operation for a certain information shared by the user.
4) The sharing cancellation requesting unit 313 processes the user operation, queries the sharing relationship of the information from the re-sharing setting unit 321 or the re-sharing unit 322 according to the user information, knows the person sharing the information with the user, that is, selects the sharing receiver from the sharing receiver list of the user for the information, and queries whether the user is the owner of the information.
5) The sharing receiver list of the information and the query result are returned to the sharing cancellation requesting unit 313, and the sharing cancellation requesting unit 313 provides the returned information to the displaying unit 314.
6) The displaying unit 314 displays the sharing receiver list to the user in a certain form, and determines whether to provide an operation of canceling all the sharing relationships of the information or not according to the query result. If yes, the operation is provided.
7) The user selects the sharing receiver to be cancelled or determines that the information cannot be shared, and then confirms the cancellation operation. Only the information owner can set the information to a state in which no sharing receiver is allowed to share the information, and users other than the information owner can cancel the sharing set by themselves.
8) The sharing cancellation requesting unit 313 generates a sharing cancellation request according to the confirmation of the user, sends the sharing cancellation request to the address list module 350, and notifies the address list module 350 to look for the information about the cancelled sharing receiver carried in the request from the contact information about the sharing provider in the database.
9) The sharing cancellation unit 323 cancels the sharing relationship between the cancelled sharing receiver and the target shared information according to the information about the cancelled sharing receiver found by the address list module 350, and updates the internal record of sharing relationships of the information.
10) A processing result is returned to the displaying unit 314.
11) The displaying unit 314 displays the processing result to the user.

In addition to the above processes, other processes such as information deletion and modification, content deletion, and sharing notification mode set by the user also exist, which will not be described herein again.

In view of the above, the present invention has, but is not limited to, the following beneficial effects.
1) A sound and flexible information sharing mechanism is provided, so as to effectively use the network resources, facilitate a more rapid and extensive transmission of the information, enhance the information sharing efficiency, and improve the user experience. Thereby, the user finds it easier to perform information sharing and transmission. When the information is set to be shared twice or for several times, the content entity does not need to be transmitted, so that the information sources are enriched, the transmission channels of the information are increased, and it is easier to form an interactive circle around the user. Meanwhile, the user also finds it easier to cancel the information sharing and manage the information.
2) The application range of the present invention is large, which is not limited to a certain type of network, but is applicable to the Internet and mobile networks. The wide application range of the invention facilitates the interworking of information between different networks.
3) The user views the shared information from the public server, and obtains the shared information without logging in to the server that the sharing provider registers to, thereby eliminating the technical problem that the user cannot log in to the server due to some failures.

Persons of ordinary skill in the art should understand that all or a part of the steps of the information sharing method according to the embodiments of the invention may be implemented by relevant hardware under the instruction of a program. The program may be stored in a computer readable storage medium. When the program is run, the steps of the method according to the embodiments of the invention are performed. The storage medium may be a ROM/RAM, a magnetic disk, an optical disk, or the like.

In view of the above, the information sharing method, server, and system of the present invention are described in detail with specific embodiments, and these embodiments are only intended to make the method and idea of the present invention more comprehensible. Therefore, the above descriptions are not intended to limit the present invention.

## Claims

1. An information sharing and re-sharing server comprising:
a re-sharing setting unit (121, 321), adapted to set a tag for a target shared information that sets a re-sharing authority of the target shared information for others, allowing the target shared information to be re-shared or shared for several times by a sharing receiver,
the re-sharing setting unit (121, 321) being adapted to record a sharing relationship between the sharing receiver and the target shared information so as to facilitate determining whether the information is allowed to be re-shared,
the re-sharing setting unit (121, 321) being further adapted to receive a re-sharing setting request for the target shared information, and according to the re-sharing setting request, set the target shared information to a re-sharing state in which the sharing receiver is allowed to re-share the target shared information with other sharing receiver; and
a re-sharing unit (122, 322), adapted to receive a re-sharing request for the target shared information, and set the target shared information that is in a re-sharing state to a sharing state.

2. The information sharing and re-sharing server according to claim 1, wherein said re-sharing unit (322) is further adapted to record a transferred sharing relationship between a sharing provider, which is not an information owner of the shared target information, and a sharing receiver, said information owner having shared the target shared information and set the target shared information to be re-shared.

3. The information sharing and re-sharing server according to claim 1or 2, further comprising:
a re-sharing requesting unit (211, 311), adapted to send the re-sharing setting request after receiving a re-sharing setting instruction for information from the sharing provider; and
a re-sharing indicating unit (212, 312), adapted to send the re-sharing request after receiving the re-sharing requesting instruction.

4. The information sharing and re-sharing server according to any preceding claim, further comprising:
a message sending module (360), adapted to send a sharing event notifying message to the sharing receiver after the re-sharing setting unit (321) sets the target shared information to the re-sharing state in which the sharing receiver is allowed to re-share the information.

5. The information sharing and re-sharing server according to claim 4, wherein, the message sending module (360) is connected to a wired or wireless network, and sends the sharing event notifying message to the sharing receiver through the wired or wireless network.

6. The information sharing and re-sharing server according to claim 3, further comprising:
a displaying unit (314), adapted to display re-sharing information for the sharing receiver after the sharing receiver logs in.

7. The information sharing and re-sharing server according to any one of claims 1 to 6, further comprising:
an address list module (350), adapted to provide the re-sharing requesting unit(311) with the contact information after the re-sharing requesting unit (311) receives the re-sharing setting instruction for information from the sharing provider;
the re-sharing requesting unit (311), further adapted to add information of allowing the contact to re-share the target shared information in the re-sharing setting request.

8. The information sharing and re-sharing server according to any one of claims 1 to 6, further comprising:
a sharing cancellation requesting unit (313), adapted to send a sharing cancellation request after receiving a sharing cancellation instruction from the sharing provider; and
a sharing cancellation unit (323), adapted to cancel the sharing state of the target shared information after receiving the sharing cancellation request.

9. An information sharing system, comprising an information sharing and re-sharing server according to any one of the claims 1-8, and a terminal, wherein the terminal comprises: a request sending unit(411), adapted to send an instruction including a re-sharing setting request and a re-sharing request for target shared information.

10. The information sharing system according to claim 9, wherein,
the request sending unit of the terminal is further adapted to send a delivery request after the sharing receiver logs in;
the information sharing server further comprises: a delivering unit (423), adapted to send information that can be re-shared to the sharing receiver after receiving the delivery request form the terminal ; and
the terminal further comprises: a displaying unit (412), adapted to display the information that can be re-shared from the delivering unit.

11. An information sharing and re-sharing method executed by an information sharing and re-sharing server, comprising:
setting (501) target shared information to a re-sharing state in which a sharing receiver is allowed to re-share the target shared information;
recording a sharing relationship between the sharing receiver and the target shared information so as to facilitate determining whether the information is allowed to be re-shared,
setting a tag that sets a re-sharing authority of the target shared information for others, allowing the target shared information to be re-shared or shared for several times; and
receiving a re-sharing request for the target shared information, and setting (502) the target shared information to a sharing state after the target shared information is set to the re-sharing state.

12. The method according to claim 11, wherein, the setting target shared information to a re-sharing state in which a sharing receiver is allowed to re-share comprises:
selecting (8) a sharing receiver from contact information of a sharing provider, sending (8)a re-sharing setting request for allowing the sharing receiver to re-share target shared information; and
setting (8) the target shared information to a re-sharing state in which the sharing receiver is allowed to re-share the information after receiving the re-sharing setting request.

13. The method according to claim 11, wherein, after the setting target shared information to a re-sharing state in which a sharing receiver is allowed to re-share, the method further comprises:
notifying(13) the sharing event to the sharing receiver through a wired or wireless network.

14. The method according to claim 11, wherein the setting the target shared information to a sharing state comprises:
displaying information that can be re-shared by the sharing receiving after the sharing receiver logs in; and
selecting the target shared information from the displayed information, and setting the target shared information to the sharing state.

## Patentansprüche

1. Informationsteil- und -weiterteilserver, umfassend:
eine Weiterteil-Setzeinheit (121, 321), die dafür ausgelegt ist, ein Tag für geteilte Zielinformationen zu setzen, das eine Weiterteilbefugnis der geteilten Zielinformationen für andere setzt, wodurch die geteilten Zielinformationen durch einen teilenden Empfänger weiter geteilt oder mehrmals geteilt werden können,
wobei die Weiterteil-Setzeinheit (121, 321) dafür ausgelegt ist, eine Teil-Beziehung zwischen dem teilenden Empfänger und den geteilten Zielinformationen aufzuzeichnen, um so das Bestimmen, ob die Informationen weiter geteilt werden dürfen, zu erleichtern,
wobei die Weiterteil-Setzeinheit (121, 321) ferner dafür ausgelegt ist, eine Weiterteil-Setzanforderung für die geteilten Zielinformationen zu empfangen und gemäß der Weiterteil-Setzanforderung die geteilten Zielinformationen auf einen Weiterteil-Zustand zu setzen, in dem dem teilenden Empfänger erlaubt ist, die geteilten Zielinformationen mit einem anderen teilenden Empfänger weiter zu teilen; und
eine Weiterteil-Einheit (122, 322), die dafür ausgelegt ist, eine Weiterteil-Anforderung für die geteilten Zielinformationen zu empfangen und die geteilten Zielinformationen, die sich in einem Weiterteil-Zustand befinden, auf einen Teil-Zustand zu setzen.

2. Informationsteil- und -weiterteilserver nach Anspruch 1, wobei die Weiterteil-Einheit (322) ferner dafür ausgelegt ist, eine transferierte Teil-Beziehung zwischen einem teilenden Anbieter, der nicht ein Informationseigentümer der geteilten Zielinformationen ist, und einem teilenden Empfänger aufzuzeichnen, wobei der Informationseigentümer die geteilten Zielinformationen geteilt und die geteilten Zielinformationen dafür gesetzt hat, weiter geteilt zu werden.

3. Informationsteil- und -weiterteilserver nach Anspruch 1 oder 2, ferner umfassend:
eine Weiterteil-Anforderungseinheit (211, 311), die dafür ausgelegt ist, die Weiterteil-Setzanforderung nach dem Empfang einer Weiterteil-Setzanweisung für Informationen von dem teilenden Anbieter zu senden; und
eine Weiterteil-Angabeeinheit (212, 312), die dafür ausgelegt ist, die Weiterteil-Anforderung nach dem Empfang der Weiterteil-Anforderungsanweisung zu senden.

4. Informationsteil- und -weiterteilserver nach einem der vorhergehenden Ansprüche, ferner umfassend:
ein Nachrichtensendemodul (360), das dafür ausgelegt ist, eine Teil-Ereignisbenachrichtigungsnachricht zu dem teilenden Empfänger zu senden, nachdem die Weiterteil-Setzeinheit (321) die geteilten Zielinformationen auf den Weiterteil-Zustand setzt, in dem dem teilenden Empfänger erlaubt ist, die Informationen weiter zu teilen.

5. Informationsteil- und -weiterteilserver nach Anspruch 4, wobei das Nachrichtensendemodul (360) mit einem verdrahteten oder drahtlosen Netzwerk verbunden ist und die Teil-Ereignisbenachrichtigungsnachricht durch das verdrahtete oder drahtlose Netzwerk zu dem teilenden Empfänger sendet.

6. Informationsteil- und -weiterteilserver nach Anspruch 3, ferner umfassend:
eine Anzeigeeinheit (314), die dafür ausgelegt ist, Weiterteil-Informationen für den teilenden Empfänger anzuzeigen, nachdem sich der teilende Empfänger anmeldet.

7. Informationsteil- und -weiterteilserver nach einem der Ansprüche 1 bis 6, ferner umfassend:
ein Adressenlistenmodul (350), das dafür ausgelegt ist, die Weiterteil-Anforderungseinheit (311) mit den Kontaktinformationen zu versehen, nachdem die Weiterteil-Anforderungseinheit (311) die Weiterteil-Setzanweisung für Informationen von dem teilenden Anbieter empfängt; und
die Weiterteil-Anforderungseinheit (311), die ferner dafür ausgelegt ist, in der Weiterteil-Setzanforderung Informationen hinzuzufügen, es dem Kontakt zu erlauben, die geteilten Zielinformationen weiter zu teilen.

8. Informationsteil- und -weiterteilserver nach einem der Ansprüche 1 bis 6, ferner umfassend:
eine Teil-Annullierungsanforderungseinheit (313), die dafür ausgelegt ist, nach dem Empfang einer Teil-Annullierungsanweisung von dem teilenden Anbieter eine Teil-Annullierungsanforderung zu senden; und
eine Teil-Annullierungseinheit (323), die dafür ausgelegt ist, den Teil-Zustand der geteilten Zielinformationen nach dem Empfang der Teil-Annullierungsanforderung zu annullieren.

9. Informationsteil-System, das einen Informationsteil- und -weiterteilserver nach einem der Ansprüche 1-8 und ein Endgerät umfasst, wobei das Endgerät Folgendes umfasst:
eine Anforderungssendeeinheit (411), die dafür ausgelegt ist, eine Anweisung zu senden, die eine Weiterteil-Setzanforderung und eine Weiterteilanforderung für geteilte Zielinformationen umfasst.

10. Informationsteil-System nach Anspruch 9, wobei
die Anforderungssendeeinheit des Endgeräts ferner dafür ausgelegt ist, eine Ablieferungsanforderung zu senden, nachdem sich der teilende Empfänger anmeldet; der Informationsteil-Server ferner Folgendes umfasst: eine Abliefereinheit (423), die dafür ausgelegt ist, Informationen, die weiter geteilt werden können, nach dem Empfang der Ablieferungsanforderung von dem Endgerät zu dem teilenden Empfänger zu senden; und
das Endgerät ferner Folgendes umfasst: eine Anzeigeeinheit (412), die dafür ausgelegt ist, die Informationen, die weiter geteilt werden können, von der Abliefereinheit anzuzeigen.

11. Informationsteil- und -weiterteilverfahren, das durch einen Informationsteil- und -weiterteilserver ausgeführt wird, umfassend:
Setzen (501) von geteilten Zielinformationen auf einen Weiterteil-Zustand, in dem es einem teilenden Empfänger erlaubt ist, die geteilten Zielinformationen weiter zu teilen;
Aufzeichnen einer Teil-Beziehung zwischen dem teilenden Empfänger und den geteilten Zielinformationen, um so das Bestimmen, ob die Informationen weiter geteilt werden dürfen, zu erleichtern,
Setzen eines Tags, das eine Weiterteil-Befugnis der geteilten Zielinformationen für andere setzt, wodurch die geteilten Zielinformationen weiter geteilt oder mehrmals geteilt werden dürfen; und
Empfangen einer Weiterteil-Anforderung für die geteilten Zielinformationen und Setzen (502) der geteilten Zielinformationen auf einen Teil-Zustand, nachdem die geteilten Zielinformationen auf den Weiterteil-Zustand gesetzt sind.

12. Verfahren nach Anspruch 11, wobei das Setzen der geteilten Zielinformationen auf einen Weiterteil-Zustand, in dem es einem teilenden Empfänger erlaubt ist, weiter zu teilen, Folgendes umfasst:
Auswählen (8) eines teilenden Empfängers aus Kontaktinformationen eines teilenden Anbieters, Senden (8) einer Weiterteil-Setzanforderung, um es dem teilenden Empfänger zu erlauben, geteilte Zielinformationen weiter zu teilen; und
Setzen (8) der geteilten Zielinformationen auf einen Weiterteil-Zustand, in dem es dem teilenden Empfänger erlaubt ist, die Informationen weiter zu teilen, nach dem Empfang der Weiterteil-Setzanforderung.

13. Verfahren nach Anspruch 11, wobei das Verfahren nach dem Setzen von geteilten Zielinformationen auf einen Weiterteil-Zustand, in dem es einem teilenden Empfänger erlaubt ist, weiter zu teilen, ferner Folgendes umfasst:
Benachrichtigen (13) des teilenden Empfängers über das Teil-Ereignis durch ein verdrahtetes oder drahtloses Netzwerk.

14. Verfahren nach Anspruch 11, wobei das Setzen der geteilten Zielinformationen auf einen Teil-Zustand Folgendes umfasst:
Anzeigen von Informationen, die durch den teilenden Empfänger weiter geteilt werden können, nachdem sich der teilende Empfänger anmeldet; und
Auswählen der geteilten Zielinformationen aus den angezeigten Informationen und Setzen der geteilten Zielinformationen auf den Teil-Zustand.

## Revendications

1. Serveur de partage et de repartage d'informations, comprenant :
une unité de réglage de repartage (121, 321), apte à régler une balise destinée à une information partagée cible qui règle une autorité de repartage de l'information partagée cible pour d'autres, permettant à un récepteur de partage de repartager ou de partager plusieurs fois l'information partagée cible,
l'unité de réglage de repartage (121, 321) étant apte à enregistrer une relation de partage entre le récepteur de partage et l'information partagée cible afin de faciliter la détermination du fait que l'information est autorisée ou non à être repartagée,
l'unité de réglage de repartage (121, 321) étant en outre apte à recevoir une demande de réglage de repartage concernant l'information partagée cible et, selon la demande de réglage de repartage, à régler l'information partagée cible dans un état de repartage dans lequel le récepteur de partage est autorisé à repartager l'information partagée cible avec un autre récepteur de partage ; et
une unité de repartage (122, 322), apte à recevoir une demande de repartage concernant l'information partagée cible, et à régler l'information partagée cible, qui est dans un état de repartage, dans un état de partage.

2. Serveur de partage et de repartage d'informations selon la revendication 1, dans lequel ladite unité de repartage (322) est en outre apte à enregistrer une relation de partage transférée entre un fournisseur de partage, qui n'est pas un propriétaire d'informations en ce qui concerne l'information partagée cible, et un récepteur de partage, ledit propriétaire d'informations ayant partagé l'information partagée cible et ayant réglé l'information partagée cible à l'état de repartage.

3. Serveur de partage et de repartage d'informations selon la revendication 1 ou 2, comprenant en outre :
une unité de demande de repartage (211, 311), apte à envoyer la demande de réglage de repartage après avoir reçu une instruction de réglage de repartage concernant des informations provenant du fournisseur de partage ; et
une unité d'indication de repartage (212, 312), apte à envoyer la demande de repartage après avoir reçu l'instruction de demande de repartage.

4. Serveur de partage et de repartage d'informations selon l'une quelconque des revendications précédentes, comprenant en outre :
un module d'envoi de message (360), apte à envoyer un message de notification d'événement de partage au récepteur de partage après que l'unité de réglage de repartage (321) a réglé l'information partagée cible dans l'état de repartage dans lequel le récepteur de partage est autorisé à repartager l'information.

5. Serveur de partage et de repartage d'informations selon la revendication 4, dans lequel le module d'envoi de message (360) est connecté à un réseau câblé ou sans fil, et envoie le message de notification d'événement de partage au récepteur de partage par l'intermédiaire du réseau câblé ou sans fil.

6. Serveur de partage et de repartage d'informations selon la revendication 3, comprenant en outre :
une unité d'affichage (314), apte à afficher une information de repartage concernant le récepteur de partage après que le récepteur de partage s'est connecté.

7. Serveur de partage et de repartage d'informations selon l'une quelconque des revendications 1 à 6, comprenant en outre :
un module de fourniture de liste d'adresses (350), apte à fournir à l'unité de demande de repartage (311) l'information de contact après que l'unité de demande de repartage (311) a reçu l'instruction de réglage de repartage concernant l'information provenant du fournisseur de partage ;
l'unité de demande de repartage (311) étant en outre apte à ajouter des informations destinées à autoriser le contact à repartager l'information partagée cible contenue dans la demande de réglage de repartage.

8. Serveur de partage et de repartage d'informations selon l'une quelconque des revendications 1 à 6, comprenant en outre :
une unité d'annulation de partage (313), apte à envoyer une demande d'annulation de partage après avoir reçu une instruction d'annulation de partage du fournisseur de partage ; et
une unité d'annulation de partage (323), apte à annuler l'état de partage des informations partagées cibles après avoir reçu la demande d'annulation de partage.

9. Système de partage d'informations, comprenant un serveur de partage et de repartage d'informations selon l'une quelconque des revendications 1 à 8, et un terminal, le terminal comprenant: une unité d'envoi de demande (411), apte à envoyer une instruction contenant une demande de réglage de repartage et une demande de repartage concernant l'information partagée cible.

10. Système de partage d'informations selon la revendication 9, dans lequel :
l'unité d'envoi de demande du terminal est en outre apte à envoyer une demande de fourniture après que le récepteur de partage s'est connecté ;
le serveur de partage d'informations comprend en outre : une unité de distribution (423), apte à envoyer au récepteur de partage des informations qui peuvent être repartagées après réception de la demande de distribution en provenance du terminal ; et
le terminal comprend en outre : une unité d'affichage (412), apte à afficher l'information pouvant être repartagée en provenance de l'unité de distribution.

11. Procédé de partage et de repartage d'informations exécuté par un serveur de partage et de repartage d'informations, comprenant :
le réglage (501) d'une information partagée cible dans un état de repartage dans lequel un récepteur de partage est autorisé à repartager l'information partagée cible ;
l'enregistrement d'une relation de partage entre le récepteur de partage et l'information partagée cible afin de faciliter la détermination du fait que l'information peut ou non être repartagée,
le réglage d'une balise qui définit une autorité de repartage de l'information partagée cible pour d'autres, en permettant à l'information partagée cible d'être repartagée ou partagée plusieurs fois ; et
la réception d'une demande de repartage concernant l'information partagée cible, et le réglage (502) de l'information partagée cible dans un état de partage après que l'information partagée cible a été réglée dans l'état de repartage.

12. Procédé selon la revendication 11, dans lequel le réglage de l'information partagée cible dans un état de repartage dans lequel un récepteur de partage est autorisé à effectuer un repartage, comprend :
la sélection (8) d'un récepteur de partage parmi des informations de contact d'un fournisseur de partage, l'envoi (8) d'une demande de réglage de repartage destinée à permettre au récepteur de partage de repartager l'information partagée cible ; et
le réglage (8) de l'information partagée cible dans un état de repartage dans lequel le récepteur de partage est autorisé à repartager l'information après avoir reçu la demande de réglage de repartage.

13. Procédé selon la revendication 11, dans lequel, après le réglage de l'information partagée cible dans un état de repartage dans lequel le récepteur de partage est autorisé à effectuer un repartage, le procédé comprend en outre :
la notification (13) de l'événement de partage au récepteur de partage par l'intermédiaire d'un réseau câblé ou sans fil.

14. Procédé selon la revendication 11, dans lequel le réglage de l'information partagée cible dans un état de partage comprend :
l'affichage d'informations pouvant être repartagées par le récepteur de partage après que le récepteur de partage s'est connecté ; et
la sélection de l'information partagée cible parmi les informations affichées, et le réglage de l'information partagée cible dans l'état de partage.
